# EUROPEAN PATENT APPLICATION

(11) **EP 4 738 391 A1**
(43) Date of publication of application: **06.05.2026**
(21) Application number: 24210383.6
(22) Date of filing: 01.11.2024
(51) Int. Cl.: H01B 7/18, F16G 11/04, F16L 21/00, H02G 15/08

(54) **CONNECTION OF SYNTHETIC FIBER REINFORCED CABLES**

(71) Applicant: Aritec Holding AG, 6014 Luzern (CH)
(72) Inventor: HUANG, Pierre, 6014 Luzern (CH)
(74) Representative: Keller Schneider Patent- und Markenanwälte AG

(57) **Abstract**

A method for attaching a connection element (20) at an end section (14) of a synthetic fiber reinforced cable (10) comprises the steps of:
a) Providing a synthetic fiber reinforced cable (10) comprising a cable core (11) surrounded by a reinforcing layer (13), whereby the reinforcing layer (13) comprises a plurality of individual synthetic fiber-based strength members (13a);
b) Arranging a connection element (20) at the end section (14) of the synthetic fiber reinforced cable (10), whereby the connection element (20) is a sleeve-shaped element with an inner cavity (21), especially a conical inner cavity, which widens towards a face end (15) of the synthetic fiber cable (10);
c) At the end section (14) of the synthetic fiber-reinforced cable (10) inside the connection element (20), the reinforcing layer (13) is released, with the individual strength members (13a) being spread out to form spreaded sections (13b) of the individual strength members (13a), especially so that the individual strength members (13a) are increasingly spaced apart as the distance to the face end (15) of the synthetic fiber-reinforced cable (10) decreases;
d) Material bonding of the spreaded individual strength members (13a) with the connection element (20);
whereby the steps a) to d) can be carried out in any order as far as possible, especially the steps a) to d) are carried out in the order a), b), c), d).

## Description

### Technical field

The invention relates to a method for attaching a connection element at an end section of a synthetic fiber reinforced cable and to a method for connecting two synthetic fiber reinforced cables. A further aspect of the present invention is directed to an arrangement comprising a connection element at an end section of a synthetic fiber reinforced cable as well as to a cable assembly comprising such arrangements.

### Background art

With the growth of industries like deep-sea wind power, offshore oil drilling, and power transmission to remote islands, the use of deep-sea cables is becoming increasingly widespread. Deep-sea cables, also known as submarine cables, are specialized cables laid on the ocean floor to transmit data, electricity, or other resources between landmasses or offshore facilities. These cables are designed to withstand the harsh conditions of the deep sea, including high pressure, strong currents, and corrosive saltwater. There are two main types of deep-sea cables, i.e. telecommunication cables and power transmission cables. Other deep-sea cables are for example used for hoisting and construction purposes.

Deep-sea cables are typically made up of several layers to ensure durability and functionality. Usually, the cables comprise a core, e.g. containing a functional element such as e.g. optical fibers (for data transmission), one or more conductors (for electricity transmission), pipes (for fluid transmission) and/or tension elements (for transmission of tensile forces). Outside the core, the cables typically comprise a reinforcement layer, e.g. made of steel wires or ropes, to protect against physical damage of the cable core caused by external tension and compression forces. Additionally, further layers can be arranged in between the core and the reinforcement layer or around the reinforcement layer. This can for example be insulation layers or corrosion protection layers.

Cables with similar properties are also used to some extent in land-based applications, such as underground power supply, telecommunications and construction.

Traditionally, the reinforcement layer in these kind of cables is made of steel wires. However, the heavy weight of steel significantly limits the development of these cables, especially when it comes to deeper ocean use.

In recent years, advances in the synthetic fiber industry have led to a continuous decrease in fiber costs and improvements in quality. Synthetic fibers weigh only about 1/5 to 1/8 as much as steel, making high-strength fiber materials the preferred choice for reinforcing deep-sea cables and the like. Since these cables often cover long distances, reliable connections between cable sections or terminations are crucial.

Steel-reinforced cables can be connected by welding the steel layers, but this method is generally unsuitable for synthetic fiber-reinforced cables. The lack of an efficient and reliable way to connect synthetic fiber cables has hindered their broader adoption and industrialization, especially in deep-sea applications.

Thus, there is still a need to develop improved solutions that do not have the disadvantages mentioned above or have them to a lesser extent.

### Summary of the invention

It is the object of the invention to provide an improved solution with respect to the connection of synthetic fiber reinforced cables with further synthetic fiber reinforced cables and/or the connection of synthetic fiber reinforced cables and further objects, e.g. termination points. The solution should preferably enable the simplest and safest possible connection of synthetic fiber-reinforced cables, which can be reliably implemented even under demanding conditions, such as for example in workplaces on the high seas.

The solution of the invention is specified by the features of claim 1. Accordingly, the core of the invention is related to a method for attaching a connection element at an end section of a synthetic fiber reinforced cable comprising the steps of:
a) Providing a synthetic fiber reinforced cable comprising a cable core surrounded by a reinforcing layer, whereby the reinforcing layer comprises a plurality of individual synthetic fiber-based strength members;
b) Arranging a connection element at the end section of the synthetic fiber reinforced cable, whereby the connection element is a sleeve-shaped element with an inner cavity, especially a conical inner cavity, which widens towards a face end of the synthetic fiber cable;
c) At the end section of the synthetic fiber-reinforced cable inside the connection element or to be placed inside the connection element, the reinforcing layer is released, with the individual strength members being spread out to form spreaded sections of the individual strength members, especially so that the individual strength members are increasingly spaced apart as the distance to the face end of the cable decreases;
d) Material bonding of the spreaded individual strength members with the connection element;
whereby the steps a) to d) can be carried out in any order as far as possible, especially the steps a) to d) are carried out in the order a), b), c), d).

The method according to the invention turned out to be highly beneficial. It allows for connecting synthetic fiber reinforced cables with further synthetic fiber reinforced cables as well as for connecting synthetic fiber reinforced cables with termination points. Thereby, highly reliable force-transmitting connections can be established. The maximum tensile strength of the connection can easily be designed so that it is at least as high as the tensile strength of the synthetic fiber-reinforced cables. This results in safe connections. Nevertheless, the connection of the synthetic fiber reinforced cables can be released without problems, if required.

Furthermore, the method according to the invention is quick and easy to carry out and requires only a few parts and tools. In particular, it can be implemented reliably even under demanding conditions, such as in workplaces on the high seas, e.g. on ships or platforms. Inter alia, this is due to the material bonding of the individual strength members with the connection element. Screw connections and clamps for connecting the individual strength members with the connection element can therefore be dispensed with.

The material bonding of the individual strength members with the connection element furthermore results in a highly uniform transmission of forces of the individual strength members to the connection element. This reduces the risk of overloading of an individual strength member.

Overall a highly advantageous solution with respect to the connection of synthetic fiber reinforced cables with further synthetic fiber reinforced cables and/or the connection of synthetic fiber reinforced cables and further objects such as e.g. termination points is provided.

Further aspects and advantageous embodiments of the invention are subject of the further claims and outlined throughout the description.

In particular, the connection element is configured to accommodate the spreaded sections of the individual strength members in the inner cavity, especially in the inner conical cavity.

Preferably, the spreaded sections of the individual strength members are evenly distributed in the connection element.

Especially, the spreaded sections of the individual strength members are arranged in the connection element to form a hollow cone-shaped structure.

Particularly, each of the spreaded sections of the individual strength members runs along a straight line in the inner cavity. Thereby, preferably, an angle between the straight lines of the spreaded sections and the longitudinal axis of the connection element is from 1 - 60°, especially 2 - 45°, in particular 5 - 30°, for example 10 - 25°. However, other configurations are possible as well.

The above mentioned features allow for an even more uniform transmission of forces of the individual strength members to the connection element.

Preferably, material bonding is effected by an adhesive, especially a reactive adhesive. In particular an epoxy-based adhesive, a polyester-based adhesive and/or a polyurethane-based adhesive is used.

Reactive adhesives cure through a chemical reaction that is triggered by mixing the components and/or by moisture from the environment. Such kind of adhesives typically form very strong bonds once cured and are suitable for high-stress environments. Furthermore, these adhesives typically are resistant to aggressive chemicals environments, temperature variations, and environmental conditions, enhancing longevity.

Furthermore, reactive adhesives cure only when exposed to specific conditions (heat, UV light, or two-component mixing). This allows precise control over the application and bonding process.

The adhesive may be applied by localized application, e.g. with an applicator gun, and/or by casting, e.g. inside the cavity. With casting, casting molds can be used to restrict the adhesive in the cavity to defined areas.

In a special embodiment, the connection element comprises holes for injection of the adhesive into the hollow inner space of the connection element.

In particular, the spreaded sections of the individual strength members are material bonded with a boundary surface of the inner cavity.

The spreaded sections of the individual strength members preferably are embedded in the adhesive. This means that the spreaded sections of the individual strength members, at least section wise or entirely, are fully covered by the adhesive.

In particular, especially during and/or after step c), the individual strength members, especially the terminal ends of the individual strength members, are kept in spreaded position with a support element, especially so that the individual strength members are increasingly spaced apart as the distance to the face end of the cable decreases. The support element in particular is a plate-shaped element, especially a disc-shaped element, for example a circular disc-shaped element.

The support element, in particular the plate-shaped element, especially the disc-shaped element, for example the circular disc-shaped element, preferably is arranged in an area of the face end of the synthetic fiber-reinforced cable and/or in an area of the opening of the cavity facing the face end of the synthetic fiber cable.

The support element, especially the plate-shaped element, preferably comprises recesses and/or through holes for receiving the individual strength members, especially terminal ends of the individual strength members and/or for injecting adhesive.

Further preferred, the support element, in particular is a plate-shaped element, especially a disc-shaped element, for example a circular disc-shaped element, comprises a central bore that is configured for receiving the parts of the synthetic fiber reinforced cable inside the reinforcing layer. Especially, the central bore is configured for receiving the cable core and, preferably, all of the layers between the cable core and the reinforcing layer. Thereby, preferably, an area of the central bore is configured to be essentially complementary to a cross-sectional area of the parts of the synthetic fiber reinforced cable inside the reinforcing layer, especially the cable core and, preferably, all of the layers between the cable core and the reinforcing layer.

The recesses and/or through holes preferably are arranged around the central bore, especially in a regular arrangement.

The individual strength members, especially terminal ends of the individual strength members, preferably are fixed into the recesses and/or through holes with an adhesive , especially by localized application of an adhesive as described herein. However, other means for fixation, e.g. fixing through a form-fit and/or force-fitting connection, such as for example with a steel wire , can be used alternatively or in addition.

Especially, material bonding of the spreaded individual strength members with the connection element is effected by introducing the adhesive through one or more of the through holes of the supporting element, in particular by injection of the adhesive in a direction of a longitudinal axis of the synthetic fiber reinforced cable and/or from a side of a face end of the synthetic fiber reinforced cable.

According to a highly beneficial embodiment, the core comprises an electrical conductor, made of a metallic material, especially comprising or consisting of copper and/or aluminum. In this case, the synthetic fiber reinforced cable may be a power transmission cable and/or a electrical signal cable, especially a deep-sea power transmission and/or electrical signal cable.

In another embodiment, the core comprises optical fibers that are configured for transmission of optical signals, especially telecommunication signals. Thereby, the synthetic fiber reinforced cable may be a telecommunication cable, especially a deep-sea telecommunication cable.

According to a still further embodiment, the core comprises optical fibers and electrical conductors. In this case, the synthetic fiber reinforced cable is a hybrid cable, e.g. configured for the simultaneous transmission of power, electrical signals and/or optical signals.

Especially, the core is surrounded by an insulation layer that is located inside the reinforcement layer. This allows for electrically decouple the core from the reinforcement layer and/or further layers.

Also, the synthetic fiber reinforced cable may comprise further layers such as for example, protective layers, barrier layers, bedding layers, buffering layers inside and/or outside the core or the reinforcement layer.

Especially, the individual synthetic fiber-based strength members are based on or consist of carbon fibers, aramid fibers, glass fibers, basalt fibers, polyester fibers, and/or LCP fibers. LCP fibers are liquid crystal polymer fibers. Especially, the LCP fibers comprise aromatic rings with ester and/or amide linkages, in particular arranged in a highly ordered, semi-crystalline state.

Preferably, the individual synthetic fiber-based strength members are based on or consist of fibers with a tensile strength of at least 600 MPa, preferably at least 1'000 MPa, in particular at least 1 '800 MPa, more preferred at least 2'500 MPa or at least 3'000 MPa.

In particular, the individual synthetic fiber-based strength members consist of synthetic fiber cords and/or synthetic fiber ropes. In a special embodiment, the synthetic fiber cords and/or synthetic fiber ropes comprise or consist of twisted fibers.

However, especially, the synthetic fiber reinforced cable does not comprise metallic strength members and/or metallic reinforcement layers. This allows for a significant reduction in weight of the cable.

The individual synthetic fiber-based strength members of the reinforcement layer in particular are not woven together. Thus, the individual synthetic fiber-based strength members together in particular do not form a woven fabric or a textile formed by weaving.

A diameter of the synthetic fiber reinforced cable for example is from 1-50 cm, especially 1.5 - 10 cm. However, depending on the specific application, thinner or thicker cables are possible as well.

The connection element is a sleeve-shaped element with an inner cavity, especially a conical inner cavity. Especially, the cavity is a continuous cavity that completely permeates the connection element. In particular, the cavity has the shape of a truncated cone.

The cavity in particular is open at opposite ends of connection element, whereby an area of the opening facing away from the face end of the synthetic fiber cable is smaller than the area of the opposite opening or the opening facing the face end of the synthetic fiber cable.

An area of the opening facing away from the face end of the synthetic fiber cable preferably is configured to be essentially complementary to a cross-sectional area of the synthetic fiber cable. In this manner, the connection element at the side facing away from the face end of the synthetic fiber cable securely sits on the synthetic fiber cable.

The connection element at least in a section has a conical outer shape and/or a circular cylindrical outer shape. However, other shaped are possible as well.

Further preferred, the connection element comprises a flange, especially a circumferential flange. Preferably, the flange is a ring-shaped flange. The flange in particular ha one, two or more bores for connecting the flange to a further object.

The flange in particular protrudes in a direction perpendicular to a longitudinal axis of the connection element and/or the synthetic fiber reinforced cable from the connection element.

A flange allows for an effective an easy connection of the synthetic fiber reinforced cable with a further synthetic fiber reinforced cable or a further object, such as e.g. a termination point. The connection can e.g. be achieved via a screw connection, clamp connection and/or material bonding.

Especially, the connection element is made from a metallic material and/or synthetic material. Metallic materials are particularly preferred, for example, alloy, steel and/or aluminum, in particular alloy.

A further aspect of the present invention is directed to a method for connecting two synthetic fiber reinforced cables comprising the steps of:
(i) Attaching a connection element at an end section of a synthetic fiber reinforced cable with the method as described above;
(ii) Attaching a further connection element at an end section of a further synthetic fiber reinforced cable with the method as described above;
(iii) Connecting the two connection elements of the two synthetic fiber reinforced cables.

In the present context, if not otherwise stated or evident, "connecting" in particular means the creation of a mechanical force-transmitting connection, especially in a longitudinal direction of the cables. Thereby, preferably, a maximum tensile strength of the connection is at least as great as the tensile strength of the synthetic fiber reinforced cable and/or the further synthetic fiber reinforced cable.

Especially, the connection elements of the two of the two synthetic fiber reinforced cables essentially identical in design.

Further preferred, the synthetic fiber reinforced cable and the further synthetic fiber reinforced cable are essentially identical in design.

However, other embodiments are possible as well. For example, the synthetic fiber reinforced cable and/or the further synthetic fiber reinforced cable may be different in design, e.g. with respect to their diameter and/or core. In this case, preferably, at least a flange or the connection elements are identical in design.

Especially, each of the two connection elements comprises a flange, especially a circumferential flange. Preferably, the flange is a ring-shaped flange. The flange in particular ha one, two or more bores for connecting the flange to a further object.

The flange in particular protrudes in a direction perpendicular to a longitudinal axis of the connection element and/or the synthetic fiber reinforced cable from the connection element

Especially, the two connection elements of the two synthetic fiber reinforced cables are connected with a screw connection, a clamp connection and/or material bonding. A screw connection is particularly beneficial. Preferably, the connection is established via the flanges of the connection elements.

In particular, the method furthermore comprises the step of connecting the cores of the two synthetic fiber reinforced cables, e.g. by electrically connecting electrical connectors in the cores and/or by connecting optical fibers of the cable cores.

Likewise, instead of connecting the synthetic fiber reinforced cable with a further synthetic fiber reinforced cable, the synthetic fiber reinforced cable can be connected with a further object, such as e.g. a termination point. A termination point may for example be a distribution device, where electrical signal, optical signals and/or power is inserted into the cable and/or taken from the cable.

Another aspect of the present invention is related to an arrangement comprising a connection element at an end section of a synthetic fiber reinforced cable, especially obtained by a method as described above, whereby:
a) The synthetic fiber reinforced cable comprises a cable core surrounded by a reinforcing layer, whereby the reinforcing layer comprises a plurality of individual synthetic fiber-based strength members;
b) A connection element is arranged at an end section of the synthetic fiber reinforced cable, whereby the connection element is a sleeve-shaped element with an inner cavity, especially a conical inner cavity, which widens towards a face end of the synthetic fiber cable;
c) At the end section of the synthetic fiber-reinforced cable inside the connection element, the individual strength members are spread out to form spreaded sections of the individual strength members, especially so that the individual strength members are increasingly spaced apart as the distance to the face end of the cable decreases;
d) The spreaded individual strength members are material bonded with the connection element.

Features described as advantageous above in the methods according to the invention are also realized in preferred embodiments in the arrangement.

In particular, the spreaded individual strength members are bonded with the connection element by an adhesive, especially a reactive adhesive, in particular an epoxy-based adhesive, a polyester-based adhesive, a polyurethane-based adhesive and/or a styrene-based adhesive.

Especially, the spreaded sections of the individual strength members are material bonded with a boundary surface of the inner cavity.

The spreaded sections of the individual strength members preferably are embedded in the adhesive.

In particular, the individual strength members, especially the terminal ends of the individual strength members, are kept in spreaded position with a support element, especially so that the individual strength members are increasingly spaced apart as the distance to the face end of the cable decreases. The support element in particular is a plate-shaped element, especially a disc-shaped element, for example a circular disc-shaped element as described above in connection with the method according to the invention.

Another aspect of the present invention is concerned with a cable assembly comprising:
(i) An arrangement as described above comprising the connection element at the end section of the synthetic fiber reinforced cable;
(ii) A further arrangement as described comprising a further connection element at an end section of a further synthetic fiber reinforced cable;
(iii) Whereby the connection elements of the two arrangements are connected to each other.

Features described as advantageous above in the methods according to the invention are also realized in preferred embodiments in the cable assembly.

In particular, in the cable assembly, the connection elements of the two fiber reinforced cables are essentially identical in design.

Further preferred, the synthetic fiber reinforced cable and the further synthetic fiber reinforced cable are essentially identical in design.

However, other embodiments are possible as well. For example, the synthetic fiber reinforced cable and/or the further synthetic fiber reinforced cable may be different in design, e.g. with respect to their diameter and/or core. In this case, preferably, at least a flange or the connection elements are identical in design.

Especially, each of the two connection elements comprises a flange, especially a circumferential flange. Preferably, the flange is a ring-shaped flange. The flange in particular has one, two or more bores for connecting the flange to a further object.

The flange in particular protrudes in a direction perpendicular to a longitudinal axis of the connection element and/or the synthetic fiber reinforced cable from the connection element

Especially, the two connection elements of the two synthetic fiber reinforced cables are connected with a screw connection, a clamp connection and/or material bonding. A screw connection is particularly beneficial. Preferably, the connection is established via the flanges of the connection elements.

In particular, the cores of the two synthetic fiber reinforced cables are connected to each other, e.g. by an electrical connection between the electrical connectors in the cores and/or by an optical connection between optical fibers of the cable cores.

Further preferred, in the cable assembly, there is no direct physical contact between the synthetic fiber-based strength members of the synthetic fiber reinforced cable and synthetic fiber-based strength members the further synthetic fiber reinforced cable. The force transmission from one cable to the other in particular is effected via the connection elements.

Other advantageous embodiments and combinations of features result from the detailed description below and the entirety of the claims.

### Brief description of drawings

The drawings used to explain the embodiments show:
- Fig. 1: A longitudinal cross-section of a synthetic fiber reinforced cable on the left side and a connection element in the form of a sleeve-shaped element with an inner cavity on the right side;
- Fig. 2: The situation after the connection element of Fig. 1 has been arranged on the end section of the synthetic fiber reinforced cable of Fig. 1;
- Fig. 3: The situation of Fig. 2 after the spreaded individual strength members have been bonded to the connection element or the inner boundary surface of the inner cavity, respectively, by an adhesive;
- Fig. 4: A longitudinal cross-section of a cable assembly that comprises the arrangement Fig. 3 that is connected by a screw connection with a further arrangement that is similar in design as the arrangements of Fig. 3.

In the figures, the same components are given the same reference symbols.

### Exemplary embodiments

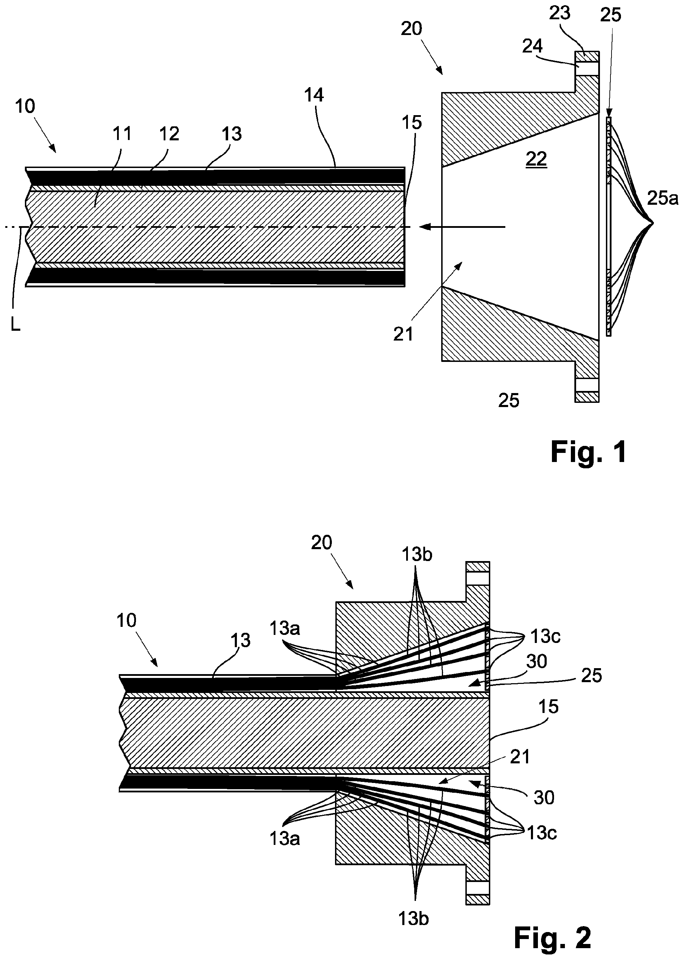

Fig.1 on the left side shows a longitudinal cross-section of a synthetic fiber reinforced cable 10, which is, for example, configured as a deep-sea power transmission cable. An end section 14 and the face end 15 of the cable 10 are oriented towards the right side in Fig. 1. The cable 10 comprises a cable core 11, e.g. consisting of an electrical conductor made of copper. The core 11 is surrounded by an insulation 12. Outside the insulation layer 12 there is a reinforcing layer 13, whereby the reinforcing layer comprises a plurality of individual synthetic fiber-based strength members, e.g. in the form of individual strands made from aramid fibers.

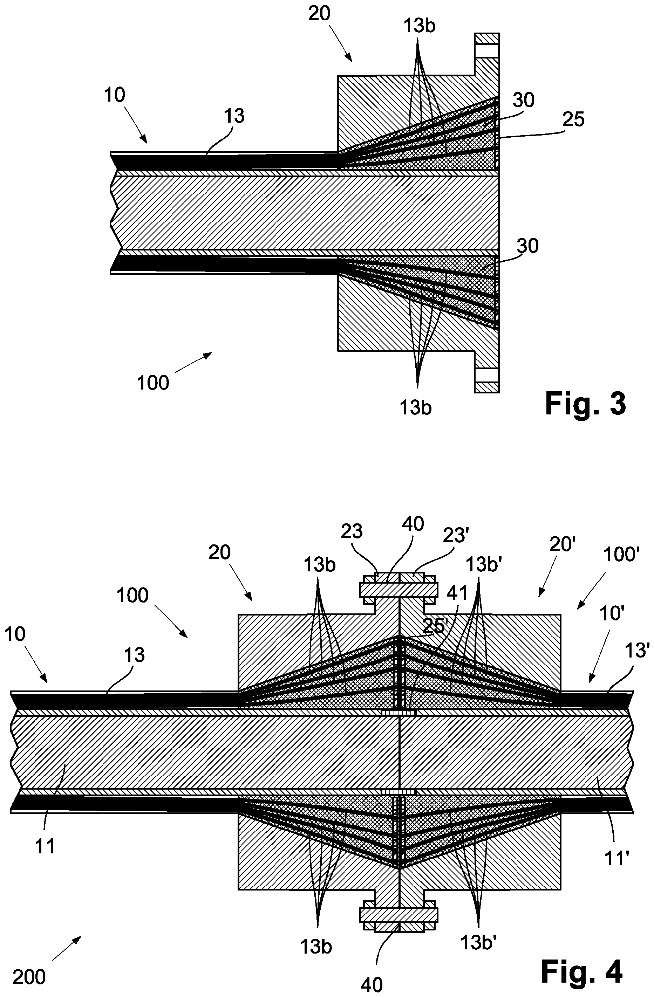

On the right side of Fig. 1, a connection element 20 in the form of a sleeve-shaped element with an inner cavity 21 is shown. The connection element 20 is for example made of a metallic material, e.g. stainless steel. The outer shape of the connection element 20 is essentially cylindrical whereas the inner cavity 21 is truncated cone-shaped. Thus, an inner boundary surface 22 of the cavity 21 has the shape of a conical lateral surface. At the right end of the connection element 20, a ring-shaped circumferential flange 23 with bores 24 is arranged. Furthermore, there is a circular ring-shaped supporting plate 25 having a central bore for receiving the core 11 and insulation 12, as well as a plurality of through holes 25a for receiving terminal sections 13c of individual strength members 13a and/or for injecting adhesive 30 from an outside into the hollow inner space 21 of the connection element 20 (cf. Fig. 2 and 3).

Fig. 2 show the situation after the connection element 20 has been arranged on the end section 14 of the synthetic fiber reinforced cable 10. Furthermore, at the end section 14 of the synthetic fiber-reinforced cable 10, which is inside the cavity 21 of the connection element 20, the reinforcing layer 13 is released, with the individual strength members 13a being spread out to form spreaded sections 13b of the individual strength members 13a. Thereby, the individual strength members 13b are increasingly spaced apart as the distance to the face end 15 of the cable decreases. Thereby, the terminal sections 13c of individual strength members 13a are fixed in the through holes 25a of the supporting plate that is placed within the end section of the cavity 21 of the connection element 20. In this manner, the individual strength members 13a form a hollow cone-shaped arrangement inside the cavity 21.

Fig. 3 shows the situation after the spreaded individual strength members 13a have been bonded to the connection element 20 or the inner boundary surface 22 of the inner cavity, respectively, by an adhesive 30, e.g. an epoxy-based adhesive. The adhesive was introduced into the cavity 21 through free through holes 25a of the supporting plate 25.

Thereby, the spreaded sections 13b of the individual strength members 13a are fully embedded in the adhesive 30.

The arrangement 100 shown in Fig. 3 allows for connecting the synthetic fiber reinforced cable 10 via the connection element 20 to a further object, e.g. a further synthetic fiber reinforced cable or a termination point such as e.g. a distribution device where electrical signal power is inserted into the cable core 11 and/or taken from the cable core 11.

Fig. 4 shows a longitudinal cross-section of a cable assembly that was obtained by providing the arrangement 100 of Fig. 3 comprising the connection element 20 at the end section of the synthetic fiber reinforced cable 10 together with a further arrangement 100' comprising a further connection element 20' at an end section of a further synthetic fiber reinforced cable 10'. The arrangement 100' is essentially identical in design with the arrangement 100 of Fig. 3. Structurally identical elements of the arrangement 100' are marked with the same reference signs as with arrangement 100 but with an added apostrophe.

Specifically, in Fig. 4 the connection element 20 of first arrangement 100 is arranged opposite the connection element 20' of the further arrangement 100' and connected to each other with screw connectors 40 placed in the bores 24 of the circumferential flange 23. Furthermore, the cores 11, 11' of the two synthetic fiber reinforced cables 10, 10' are connected to each other, e.g. by an electrical connector 41.

The exemplary embodiments are not to be understood as restrictive and can be modified within the scope of the invention.

For example, instead or in addition to the electrical conductors, other functional elements can be arranged in the cores 11, 11' of the cables 10, 10'.

The insulation layer 12 may be omitted and/or additional layers may be present in the cables 10, 10'. Especially, protective layers, barrier layers, bedding layers, buffering layers may be foreseen inside and/or outside the core 11, 11' or the reinforcement layer 13, 13'.

Furthermore, in the cable assembly 200 shown in Fig. 4, the cables 10 and 10' do not necessarily need to be identical in design. The same is true for the connection elements 20, 20'.

The connection between the two arrangements 100, 100' in Fig. 4 can also be realized by material bonding, e.g. with an adhesive and/or welding. In these cases flanges 23, 23'may be omitted.

Also, it is possible to provide connection elements with different outer and/or inner shapes. For example, an outer shape of the connection elements can for example be conical.

In summary, it is to be noted that the invention provides highly beneficial methods for the connection of synthetic fiber reinforced cables with further synthetic fiber reinforced cables and/or the connection of synthetic fiber reinforced cables and further objects.

## Claims

1. Method for attaching a connection element (20) at an end section (14) of a synthetic fiber reinforced cable (10) comprising the steps of:
a) Providing a synthetic fiber reinforced cable (10) comprising a cable core (11) surrounded by a reinforcing layer (13), whereby the reinforcing layer (13) comprises a plurality of individual synthetic fiber-based strength members (13a);
b) Arranging a connection element (20) at the end section (14) of the synthetic fiber reinforced cable (10), whereby the connection element (20) is a sleeve-shaped element with an inner cavity (21), especially a conical inner cavity, which widens towards a face end (15) of the synthetic fiber cable (10);
c) At the end section (14) of the synthetic fiber-reinforced cable (10) inside the connection element (20) or to be placed inside the connection element (20), the reinforcing layer (13) is released, with the individual strength members (13a) being spread out to form spreaded sections (13b) of the individual strength members (13a), especially so that the individual strength members (13a) are increasingly spaced apart as the distance to the face end (15) of the synthetic fiber-reinforced cable (10) decreases;
d) Material bonding of the spreaded individual strength members (13a) with the connection element (20);
whereby the steps a) to d) can be carried out in any order as far as possible, especially the steps a) to d) are carried out in the order a), b), c), d).

2. Method according to claim 1, whereby the spreaded sections (13b) of the individual strength members (13a) are evenly distributed in the inner cavity (21) of the connection element (20), especially the individual strength members (13a) form a hollow cone-shaped arrangement.

3. Method according to any of preceding claims, whereby in the inner cavity (21) each of the spreaded sections (13b) of the individual strength members (13a) runs along a straight line.

4. Method according to any of preceding claims, whereby the individual strength members (13a), especially terminal ends (13c) of the individual strength members (13a), are kept in spreaded position with a support element (25), whereby, preferably, the support element (25) is a plate-shaped element, especially a disc-shaped element, for example a circular disc-shaped element, and the support element (25) comprises recesses and/or through (25a) holes, in which the individual strength members (13a), especially the terminal ends (13c) of the individual strength members (13a) are introduced.

5. Method according to any of preceding claims, whereby the core (11) comprises an electrical conductor, made of a metallic material, especially comprising or consisting of copper, brass and/or aluminum; and/or the core (11) comprises optical fibers that are configured for transmission of optical signals, especially telecommunication signals.

6. Method according to any of preceding claims, whereby the core (11) is surrounded by an insulation layer (12) that is located inside the reinforcement layer (13).

7. Method according to any of preceding claims, whereby the individual synthetic fiber-based strength members (13a) consist of synthetic fiber cords and/or synthetic fiber ropes; whereby the individual synthetic fiber-based strength members (13a) of the reinforcing layer (13) are not woven together.

8. Method according to any of preceding claims, whereby material bonding is effected by an adhesive (30), especially a reactive adhesive, in particular an epoxy-based adhesive, a polyester-based adhesive, a polyurethane-based adhesive and/or a styrene-based adhesive.

9. Method according to any of preceding claims, whereby the spreaded sections (13b) of the individual strength members (13a) are embedded in the adhesive (30).

10. Method according to any of preceding claims, whereby the connection element (30) comprises a flange (23), especially a circumferential flange, preferably a ring-shaped flange, in particular with one, two or more bores (24) for connecting the flange (23) to a further object.

11. Method for connecting two synthetic fiber reinforced cables (10, 10') comprising the steps of:
(i) Attaching a connection element (20) at an end section (14) of the synthetic fiber reinforced cable (10) according to the method according to any of claims 1 - 10;
(ii) Attaching a further connection element (20') at an end section of a further synthetic fiber reinforced cable (10') according to the method according to any of claims 1 - 10;
(iii) Connecting the two connection elements (20, 20') of the two synthetic fiber reinforced cables (10, 10').

12. Method according to claim 11, whereby the synthetic fiber reinforced cable (10) and the further synthetic fiber reinforced cable (10') are essentially identical in design.

13. Method according to any of claims 11 - 12, whereby the two connection elements (20, 20') of the two synthetic fiber reinforced cables (10, 10') are connected with a screw connection (40), especially with at least two screw connections.

14. Method according to any of claims 11 - 13, whereby the method furthermore comprises the step of connecting the cores (11, 11') of the two synthetic fiber reinforced cables (10, 10'), e.g. by electrically connecting electrical connectors in the cores (11, 11') and/or by connecting optical fibers of the cable cores (11, 11').

15. Arrangement (100) comprising a connection element (20) at an end section (14) of a synthetic fiber reinforced cable (10), especially obtained by a method according to any of preceding claims, whereby:
a) The synthetic fiber reinforced cable (10) comprises a cable core (11) surrounded by a reinforcing layer (13), whereby the reinforcing layer (13) comprises a plurality of individual synthetic fiber-based strength members (13a);
b) The connection element (20) is arranged at the end section (14) of the synthetic fiber reinforced cable (10), whereby the connection element (20) is a sleeve-shaped element with an inner cavity (21), especially a conical inner cavity, which widens towards a face end (15) of the synthetic fiber cable (15);
c) At the end section (14) of the synthetic fiber-reinforced cable (10) inside the connection element (20), the individual strength members (13a) are spread out to form spreaded sections (13b) of the individual strength members (13a), especially so that the individual strength members (13a) are increasingly spaced apart as the distance to the face end (15) of the synthetic fiber-reinforced cable (10) decreases;
d) In the spreaded sections (13b), the individual strength members (13a) are material bonded with the connection element (20).

16. Cable assembly (200), especially obtained by a method according to any of claims 11 - 14, comprising:
(i) The arrangement (100) according to claim 15 with the connection element (20) at the end section (14) of the synthetic fiber reinforced cable (10);
(ii) A further arrangement (100') according to claim 15 with a further connection element (20') at an end section of a further synthetic fiber reinforced cable (10');
(iii) Whereby the connection elements (20, 20') of the two arrangements (100, 100') are connected to each other.
